# EUROPEAN PATENT APPLICATION

(11) **EP 2 793 122 A2**
(43) Date of publication of application: **22.10.2014**
(21) Application number: 14162672.1
(22) Date of filing: 31.03.2014
(51) Int. Cl.: G06F 3/16, H04M 1/60

(54) **Method for controlling audio output and device supporting the same**

(30) Priority: 15.04.2013 KR 20130041151
(71) Applicant: Samsung Electronics Co., Ltd., Suwon-si Gyeonggi-do 443-742 (KR)
(72) Inventor: Park, Joohark, 443-742 Gyeonggi-do (KR); Kim, Hanjib, 443-742 Gyeonggi-do (KR); Kim, Junghun, 443-742 Gyeonggi-do (KR); Jeon, Yongjoon, 443-742 Gyeonggi-do (KR)
(74) Representative: Nederlandsch Octrooibureau

(57) **Abstract**

A method for controlling an audio output and a device supporting the same areprovided. The method includes connecting an application operating device to an application output device through at least one communication channel, and transmitting audio information of at least one of a plurality of applications operating based on the at least one communication channel from the application operating device to the application output device.

## Description

### TECHNICAL FIELD

The present disclosure relates to an operation of an electronic device. More particularly, the present disclosure relates to an audio output control of an electronic device.

### BACKGROUND

Recently, electronic devices support complex operations of various user functions based on the advancements in hardware technology. The electronic devices of the prior art support a multi-task function. The multi-task function operating in the electronic devices activates a plurality of user functions, however only the specific user function can be supported according to a user's input control and only the user function in operation can be output in a corresponding electronic device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method for controlling an audio output with an improved audio output function and an electronic device supporting the same.

In accordance with an aspect of the present disclosure, a method for controlling an audio output is provided. The method includes connecting an application operating device to an application output device through at least one communication channel, and transmitting audio information of at least one of a plurality of applications operating based on the at least one communication channel from the application operating device to the application output device.

In accordance with another aspect of the present disclosure, a method for controlling an audio output is provided. The method includes receiving audio information of at least one of a plurality of applications operating in an application operating device by an application output device connected to the application operating device through at least one communication channel, and outputting the audio information received by the application output device.

In accordance with another aspect of the present disclosure, a device for operating an application is provided. The device includes a connection interface configured to be connected to an application output device through at least one communication channel, and a control unit configured to control to transmit audio information of at least one of a plurality of applications operating based on the at least one communication channel to the application output device.

In accordance with another aspect of the present disclosure, a device for outputting an application is provided. The device includes a device connection unit configured to receive audio information of at least one of a plurality of applications operating in an application operating device connected to an application output device through at least one communication channel, a device output unit configured to output the audio information received by application output device, and a device control unit configured to output the audio information.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A and 1B are schematic drawings illustrating a configuration of device operating system for supporting an audio output function according to an embodiment of the present disclosure;
FIG. 2 is a block diagram illustrating a more detailed configuration of application operating device according to an embodiment of the present disclosure;
FIG. 3 is a block diagram illustrating a more detailed configuration of control unit in an application operating device according to an embodiment of the present disclosure;
FIG. 4 is a block diagram illustrating a more detailed configuration of an application output device according to an embodiment of the present disclosure;
FIG. 5 is a flowchart illustrating a method for controlling an application operating device to control an audio output according to an embodiment of the present disclosure;
FIG. 6 is a flowchart illustrating a detailed procedure of operation 511 in FIG. 5 according to an embodiment of the present disclosure;
FIG. 7 is a flowchart illustrating a method for transmitting audio information according to an operation of a sound mixer in the application operating device according to an embodiment of the present disclosure;
FIGS. 8 and 9 are block diagrams illustrating a method of allocating and operating a sound mixer according to the present disclosure according to an embodiment of the present disclosure;
FIG. 10 is a flowchart illustrating a method for changing audio information in an audio output control function according to an embodiment of the present disclosure;
FIG. 11 is a flowchart illustrating a method for changing a sound in an audio output control function according to another embodiment of the present disclosure;
FIG. 12 is a drawing illustrating an example of screen interface operating in FIG. 11 according to an embodiment of the present disclosure; and
FIG. 13 is a flowchart illustrating a method for operating an application operating device in a device disconnection state of an audio output control function according to an embodiment of the present disclosure.
The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

For the same reasons, some components in the accompanying drawings are emphasized, omitted, or schematically illustrated, and the size of each component does not fully reflect the actual size. Therefore, the present disclosure is not limited to the relative sizes and distances illustrated in the accompanying drawings.

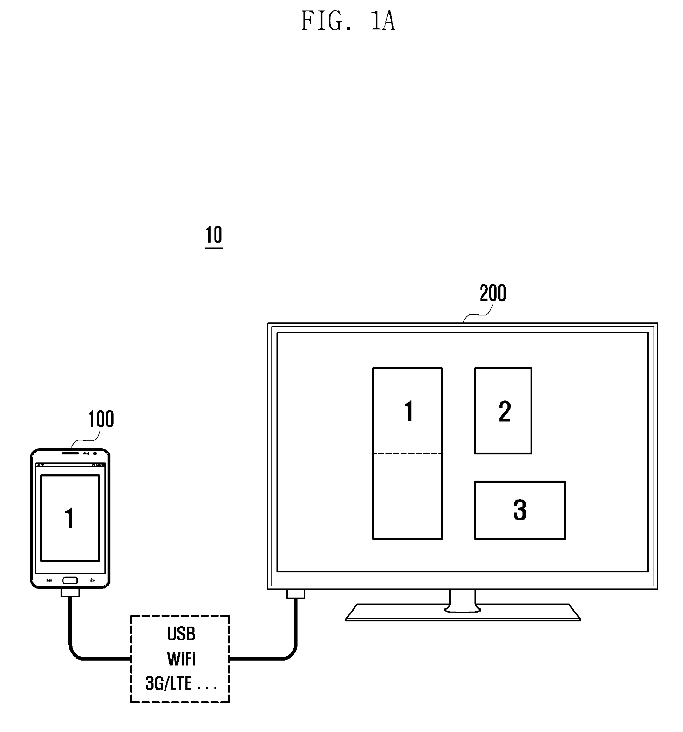

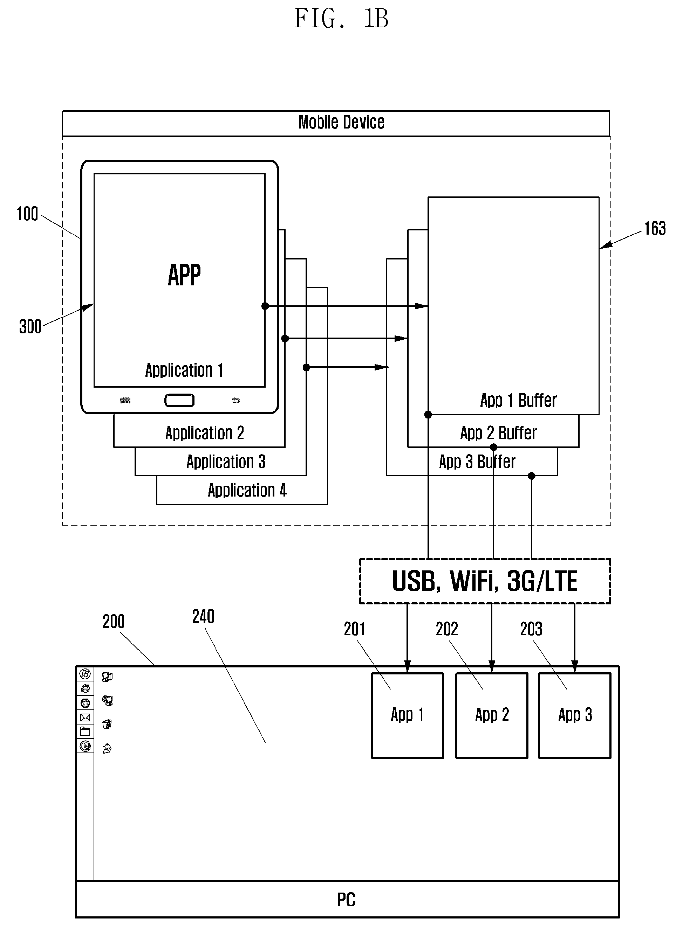

FIGS. 1A and 1B are schematic drawings illustrating a configuration of device operating system for supporting an audio output function according to an embodiment of the present disclosure.

Referring to FIGS. 1A and 1B, device operating system 10 according to the present disclosure may include a plurality of electronic devices, for example, at least one application operating device 100 and at least one application output device 200.

The device operating system 10 having the above configuration can output data of at least one Application (App) 300 being executed in the application operating device 100 through the application output device 200. In this operation, the application output device 200 can output data of specific applications among all the applications 300 being executed in the application operating device 100. Here, the application data may include screen data and audio data generated according to the operation of application.

If it is assumed that 3 applications are operating in the application operating device 100, application data related to at least one of the 3 applications can be output through the application output device 200. The application operating device 100 may output one of the operating 3 applications to the uppermost layer, and support executions of corresponding applications according to a user input. The application operating device 100 may maintain at least one application in an activated state through background processing.

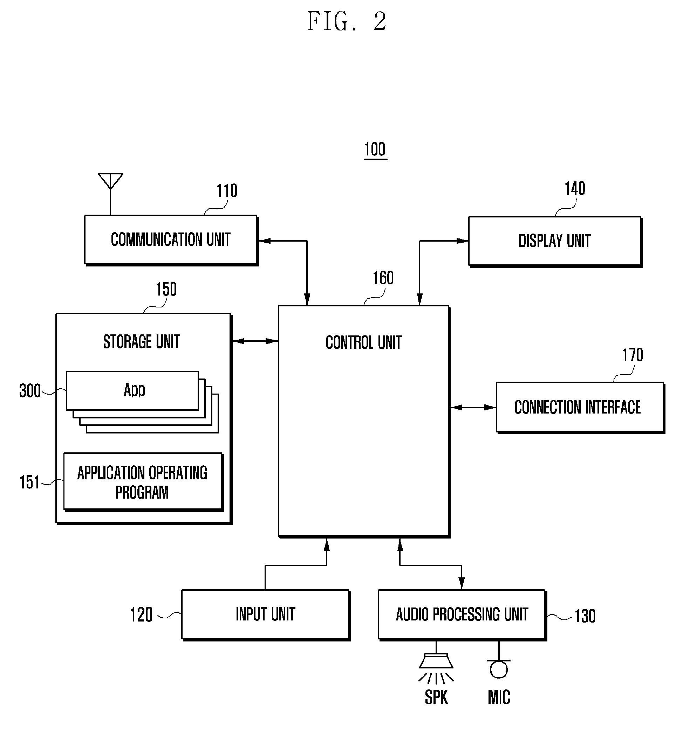

Here, an execution state may have at least one of a controllable state and an output state in the uppermost layer according to an input signal of the application operating device 100. The activation state may be a memory loading state that does not output to the uppermost layer of a screen, or a non-operating state according to an input signal. An application having a widget function among the activated applications may be changed from an activated state to an execution state. Of course, at least one of the activated states of applications may be changed to an execution state according to a user's request. Hereinafter, the memory may be written with information by a control unit 160 (see FIG. 2), or may be a Random-Access Memory (RAM) area where data stored in a storage unit 150 (see FIG. 2) is loaded. The memory may perform a role of a buffer.

The application operating device 100 stores at least one application in the storage unit 150 (see FIG. 2), activates a corresponding application according to a user's request, and provides an execution state of a specific application selectively or according to the user's request. If the application output device 200 is connected, the application operating device 100 can transmit application data related to at least one application, such as an execution state and an activated state, to the application output device 200 according to a user's request. If an update of an application is generated according to the operation of corresponding applications, the application operating device 100 can transmit updated application data to the application output device 200.

Further, the application operating device 100 can control the operation of specific applications according to at least one of input signals received from the application output device 200 and input signals received from an input unit included in the application operating device 100. If updated application data is generated at this operation, the application operating device 100 can transmit the application data to the application output device 200. Here, the application data may include at least one of image data and text data which can be output to a device display unit of the application output device 200. Further, the application data may include audio information generated by at least one application which can be output through the device output unit of the application output device 200. If audio information is generated by a plurality of activated and executing applications, the application operating device 100 according to the present disclosure can transmit at least a portion of the audio information to the application output device 200 according to a sharing state with the application output device 200 and a user control. Here, the application operating device 100 can output audio information of a specific application through an installed audio processing unit. Namely, if audio information is generated in the state of activating and executing at least one application, the application operating device 100 can output the audio information through at least one of the audio processing unit and the device output unit. If a plurality of audio information is generated, the application operating device 100 can output the plurality of audio information through at least one of the audio processing unit and the device output unit according to a user's request or a sharing state of application. Here, the sharing state of application may include a state of outputting application data of a specific application operating in the application operating device 100 through the application output device 200. The audio information may include audio data generated by the operation of a specific application. The audio data may be continuously or intermittently generated by the operating application. Hereinafter, the audio information is assumed to be audio data continuously or intermittently generated by an application.

The application operating device 100 may form at least one communication channel to transmit audio information to the application output device 200. For example, the application operating device 100 may form a communication channel with the application output device 200 to transmit audio information by using at least one of a Universal Serial Bus (USB)-based communication channel, a WiFi-based communication channel, and a 3rd Generation (3G)/Long Term Evolution (LTE)-based communication channel.

The application operating device 100 may use at least one buffer 163 to transmit the application data to the application output device 200. Each buffer 163 may temporarily store application data generated by the operation of each activated application. At least one of the application data generated by the operation of each activated application may include audio information. For example, if a specific one of 3 applications is a music play application, audio data generated by the music play application may include screen data related to the operation of application and audio information related to the music play. Further, if audio information is generated by a plurality of applications, data of the plurality of applications may individually include audio information. In this case, a plurality of audio information can be transmitted to the application output device 200. Further, the application operating device 100 may not transmit one of the pluralities of audio information to the application output device 200 but may instead transmit the same to an audio processing unit. Even though the specific application is shared with the application output device 200, the application operating device 100 may not output to the application output device 200 but may instead output the same to the audio processing unit.

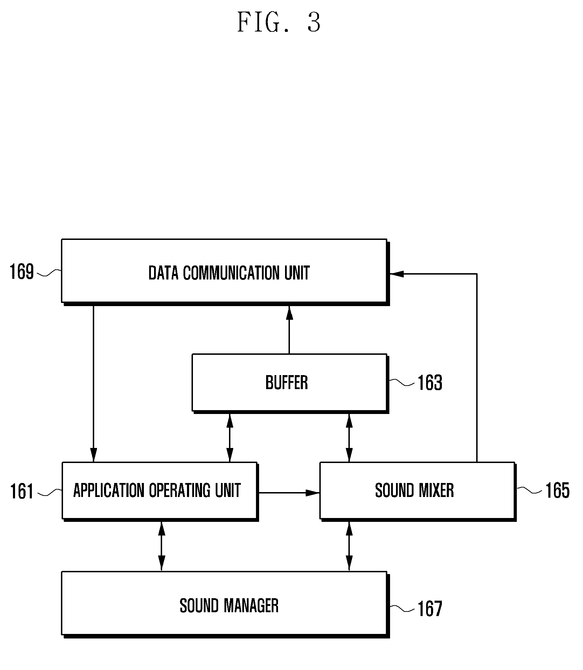

Various components of the application operating device 100 for supporting an application operating function according to the present disclosure will be described in more detail with reference to FIGS. 2 and 3.

The application output device 200 may be connected to the application operating device 100 through at least one of a wired communication and a wireless communication. The application output device 200 may receive application data according to the operation of at least one application provided by the application operating device 100, and transmit the application data to at least one of a device display unit and a device output unit. At this operation, if the application operating device 100 provides a plurality of application data, the application output device 200 may classify the application data, and control to output application areas (201, 202, and 203) corresponding to the classified application data to a device display unit 240. For this, the application output device 200 may include a device display unit 240 having a wider display area than that of the application operating device 100. The application output device 200 can output so that a plurality of application areas are not overlapped each other in the display area. Alternatively, the application output device 200 may provide a display space such that a user can easily manage each application even though some of the application areas (201, 202, and 203) are overlapped.

Further, the application output device 200 can display an application area larger than an application area displayed in the application operating device 100 for a specific application. The application output device 200 doesn't simply expand the application area in the application operating device 100 but can provide an expansion area to include more data. For example, if a list containing 10 items is output in the application operating device 100, the application output device 200 can output a list containing 20 items. For the 20 items, the application output device 200 can provide an area that is the same or larger than the area allocated to each item in the application operating device 100.

The application output device 200 includes a device output unit, and can output audio information of application data provided by the application operating device 100. A plurality of application data individually includes audio information, and the application output device 200 can output the plurality of audio information to the device output unit. Alternatively, the application output device 200 may output through the device output unit only the audio information related to a specific shared application designated by the device input unit such as a mouse or a keyboard.

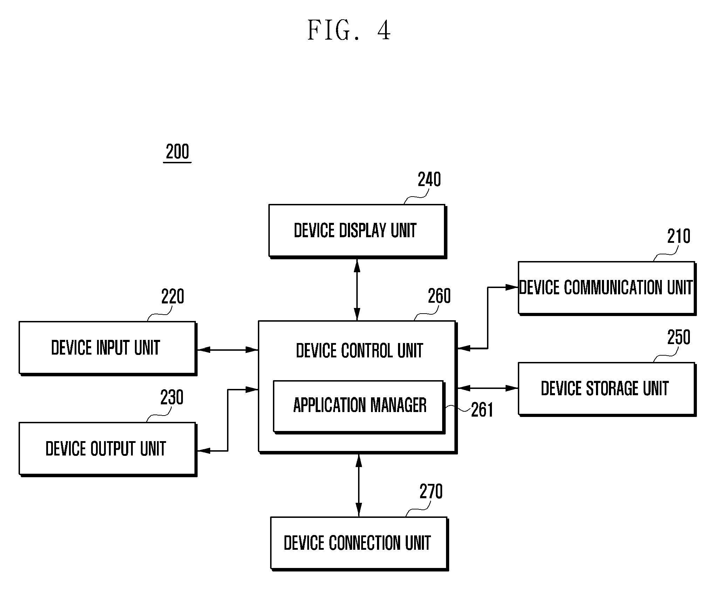

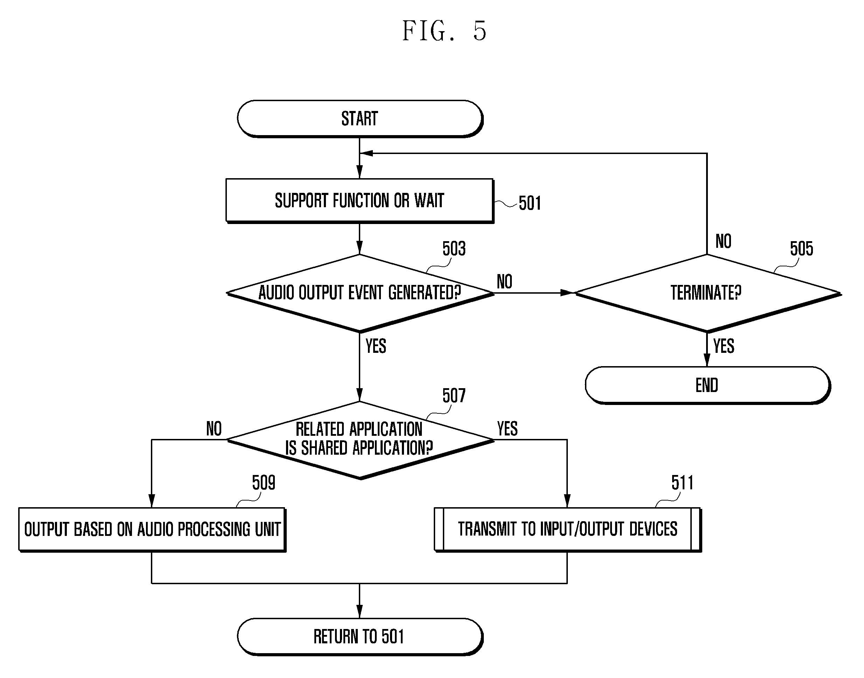

In the meantime, the application output device 200 may include a device input unit. A signal for controlling an application operation input through the device input unit may be transmitted to the application operating device 100. If application data updated by the transmitted input signal is received, the application output device 200 can update the display of application areas (201, 202, and 203) according to the updated application data. The application output device 200 may output only the audio information of a specific application designated by a signal transmitted from the device input unit. A configuration and a function of the application output device 200 will be described in more detail with reference to FIGS. 4 and 5.

The device operating system 10 providing the above function according to the present disclosure supports applications operating in the application operating device 100 to be used through various controls of the application output device 200. Further, the device operating system 10 transmits a user control of the application output device 200 to the application operating device 100 so that an application operation can be controlled. Accordingly, a user can freely manage at least one application installed in the application operating device 100 also in the application output device 200. In the meantime, various applications provided by the application operating device 100 may be an application activated or executing according to a user's selection or an application activated at a specific time according to a user setting. For example, the application may include at least one of various applications, such as a dial input application, a play application for a music file or a video file, a file editing application, a broadcast receiving application, a gallery application, a chatting application, an alarm application, a calculator application, a phonebook application, a schedule application, and a calendar application.

FIG. 2 is a block diagram illustrating a more detailed configuration of application operating device according to an embodiment of the present disclosure.

Referring to FIG. 2, the application operating device 100 according to the present disclosure may include a communication unit 110, an input unit 120, an audio processing unit 130, a display unit 140, a storage unit 150, and a control unit 160. The application operating device 100 according to the present disclosure may further include a connection interface 170. Further, the application operating device 100 according to the present disclosure may include an image sensor for collecting an image according to a designed method. The application operating device 100 according to the present disclosure may further include various sensors as an input device, such as an acceleration sensor, a proximity sensor, a gyro sensor, and an illumination sensor.

The connection interface 170 can connect at least one application output device 200. For example, the application output device 200 may be connected to a smart TeleVision (TV), smart monitor, and other electronic terminals through the connection interface 170. The application output device 200 may include various input means as a device input unit, such as a keyboard, a mouse, an electronic pen, and a remote controller. Accordingly, the connection interface 170 can output an input signal generated by the application output device 200 to the control unit 160 as well as data of at least one application to the application output device 200. The connection interface 170 can perform both a function of outputting application data of the application operating device 100 to the application output device 200 and a function of transmitting a user's input signal collected by the application output device 200 to the control unit 160.

The communication unit 110 is a component supporting a communication function of the application operating device 100. The communication unit 110 forms at least one communication channel in order to support various functions such as a message service function, a web page search function, a video communication function, a voice communication function, a data communication function, and a cloud function, used for various applications operating in the application operating device 100. If the application operating device 100 supports a mobile communication function, the communication unit 110 may include a mobile communication module. Further, if the application operating device 100 supports a broadcast receiving function, the communication unit 110 may include a broadcast receiving module. If the communication unit 110 forms a specific communication channel and receives data through the communication channel, the received data may be transmitted to the control unit 160. The control unit 160 can support an application operation by providing application data. Further, the application data provided for the operation of application may be also be transmitted to the application output device 200.

The input unit 120 is a component generating various input signals used for the operation of the application operating device 100. The input unit 120 may be formed with specific keys such as a button key, a side key, and a home key. The input unit 120 can generate an input signal for the control of a home screen or a menu screen according to a user control. In the state of executing an application, the input unit 120 is used for generating an input signal for the application operation. The control unit 160 can decide an output routine for audio information according to an input signal generated by the input unit 120. Namely, if a specific input signal is generated according to a user control, the control unit 160 may control to output audio information generated by a specific application according to the input signal to at least one of the audio processing unit 130 and the device output unit. The output control of audio information can be applied to a plurality of audio information. Namely, an input signal generated according to a user control can be determined to output first audio information to an audio processing unit and second audio information through the device output unit of the application output device 200.

If the display unit 140 is provided in a form of a touch screen supporting a touch function, the input unit 120 may include a display unit 140. A touch event generated by the display unit 140 is transmitted to the control unit 160, and the control unit 160 can apply the touch event to an executing application. If the operation of application is updated according to the input signal generated by the input unit 120, the control unit 160 can transmit the updated application data to the application output device 200.

The audio processing unit 130 is a component for processing various audio signals generated by the application operating device 100. For example, the audio processing unit 130 may include a speaker SPK for supporting an output of an audio signal generated or decoded by the application operating device 100, and a microphone MIC for collecting audio signals to support a voice/video communication function and a recording function.

If the application output device 200 is connected to the connection interface 170, the audio processing unit 130 can output a guide sound or an effect sound. If specific application data is transmitted to the application output device 200, the audio processing unit 130 can output a guide sound or an effect sound. The function of outputting the guide sound may be omitted according to a designer's intention or a user's selection.

The audio processing unit 130 can output audio information generated by an application in an activated or executing state through the speaker SPK. Further, the audio processing unit 130 may include an earphone interface, and can include an output portto output audio information to the connected earphone device. The audio processing unit 130 may have a mute state while specific audio information is being output to the application output device 200. Further, the audio processing unit 130 may output audio information generated by another application or the same audio information provided by the application output device 200 while specific audio information is being output to the application output device 200.

The display unit 140 is a component outputting various function screens used for the operation of the application operating device 100 according to the present disclosure. For example, the display unit 140 can output a menu screen, specific application operating screen, operating screens for a plurality of applications, and full screen of a specific application. In particular, display unit 140 according to the present disclosure can output an application operating screen activated according to a user's selection. The application operating screen output to the display unit 140 may have at least one of a landscape mode and a portrait mode according to a user setting or an application setting. The application operating screen output to the display unit 140 can output information updated according to a signal input through the input unit 120 or a device input unit. The updated information includes updated application data, and may be transmitted to the application output device 200. The display unit 140 can output at least one virtual control button to control the output of audio information for a plurality of applications. The virtual control buttons may be generated for each application outputting audio information, and transmitted to the display unit 140. The virtual control button may include an output device setting item and a volume control button for audio information to decide whether audio information is to be output to the application operating device 100 or to the application output device 200.

The display unit 140 may include a touch panel and a display panel to support an input function. Further, the display unit 140 may include a pen touch panel to operate an electronic pen. The touch panel may be a capacitive type or a resistive type which electrically or physically detects a user's finger touch. The touch panel is disposed at the front or rear side of the display panel, and provides location information of a finger touch and gesture information of the finger movement for the control unit 160. The display panel has an area in which screen components are output. Various screen components are output to the display panel by mapping on the touch panel. For example, the display panel may output a specific application operating screen from a plurality of operating applications. The pen touch panel disposed at the front or rear side of the display panel recognizes an approach of an electronic pen, and transmits movement information of the electronic pen to the control unit 160. The pen touch panel may be provided in various forms according to the characteristics of the electronic pen. For example, the pen touch panel may be configured with a panel using an electromagnetic induction method. The touch panel and the pen touch panel may be used as an input unit 120 for the application operating device 100 according to the present disclosure. If the application operating device 100 according to the present disclosure is designed not to include at least one of a finger touch and a pen touch, the display unit 140 may not include at least one of the touch panel and the pen touch panel.

The storage unit 150 can store various application programs used for the operation of the application operating device 100 and various application data generated by the application operating device 100. For example, the storage unit 150 can store programs such as an operating system of the application operating device 100. In particular, the storage unit 150 may store various applications related to the user functions, and provide a corresponding application function for the control unit 160 according to a user's request. For this, the storage unit 150 may include a plurality of applications 300 and an application operating program 151. Further, the storage unit 150 may include at least one buffer for temporarily storing application data generated by the applications 300. If a specific area of the storage unit 150 is not provided for the buffer, a separate buffer may be disposed in the control unit 160. Alternatively, a separate buffer may be provided in the connection interface 170.

The plurality of applications 300 may be installed in the application operating device 100 to support various functions. The plurality of applications 300 may be provided as an icon or a menu item in the display unit 140 by being allocated to a hot key. The plurality of applications 300 may be activated according to a user's request or schedule information. For example, the plurality of applications 300 may include various applications such as a voice communication application, a video communication application, a cloud application, a camera application, a web connection application, and a game application. Further, the plurality of applications 300 may include similar functions. For example, the plurality of applications 300 may include a plurality of browser applications. Further, the plurality of applications 300 may include a plurality of applications related to a camera. Further, the plurality of applications 300 may include a plurality of applications for the operation of the application output device 200. Accordingly, if the plurality of applications is activated, the application operating device 100 can support operations and processing of each application. In particular, the application operating device 100 can transmit audio information generated by at least one application to the application output device 200 by including the same into application data.

The application operating program 151 enables application data corresponding to at least one application operating in the application operating device 100 to be output through the application output device 200. The application operating program 151 may include a routine for loading at least one application requested to be activated in a memory (for example, RAM), and a routine for executing a specific application selected from the loaded applications, loading the executed application operation screen into a frame memory or a frame buffer, and outputting to the display unit 140. The frame memory or frame buffer is a storing area allocated to the display unit 140, and distinguished from the memory provided for the storage unit 150 and the control unit 160.

The application operating program 151 may include a routine for identifying a connection of the application output device 200, and a routine for transmitting application data of at least one application activated automatically or according to the setting of the connected application output device 200. The application operating program 151 may include a routine for receiving an input signal for the operation of a specific application from the application output device 200, a routine for applying the received input signal to the application, and a routine for transmitting updated application data to the application output device 200.

The application operating program 151 may include a routine for receiving an input signal from the input unit 120 or the display unit 140 having an input function, a routine for applying the received input signal to an application displayed in the uppermost screen or a specific executing application, a routine for updating an application operating screen, and a routine for outputting the updated application data to the application output device 200. The application operating program 151 may include a routine for receiving an input signal, a routine for identifying an application to be applied by the input signal, a routine for applying the input signal to the application, and a routine for updated information of the application to the application output device 200. The application operating program 151 may include a routine for applying an input signal generated by the application operating device 100 to an application executing in the application operating device 100, a routine for applying an input signal received from the application output device 200 to an application outputting application data to the application output device 200, and a routine for transmitting application data applied by the input signal of the application output device 200 back to the application output device 200 independently from the operation of the application operating device 100.

The application operating program 151 may include a routine for providing application data for a plurality of application output devices 200, or a routine for providing divided application data individually for the plurality of application output devices 200. The application operating program 151 may include a routine for storing audio information generated by an application in a buffer, a routine for transmitting the audio information stored in the buffer to the application output device 200 or the audio processing unit 130.

The connection interface 170 is a component for connecting an application output device to the application operating device 100. The connection interface 170 can support both a wired communication system and a wireless communication system. The connection interface 170 may include wired parallel connection interfaces such as a USB interface and a Universal Asynchronous Receiver/Transmitter (UART) interface. Further, the connection interface 170 may include wireless connection interfaces such as a Bluetooth connection interface, a Zigbee connection interface, an Ultra-Wide Band (UWB)a connection interface, a Radio Frequency IDentification (RFID) connection interface, an InfraRed (IR) connection interface, and a Wireless Application Protocol (WAP) connection interface. Namely, the connection interface 170 may include various communication connection interfaces connectible to the application operating device 100. The connection interface 170 may be configured by including not only the application output device 200 but also a plurality of ports for connecting to a plurality of application output devices and a plurality of wireless communication modules.

The control unit 160 is a component for supporting various signal processing and data processing related to the operation of the application operating device 100 according to the present disclosure. Namely, the control unit 160 executes a specific application if an activation of the specific application is requested, and supports to output a display screen to the display unit 140 according to the operation of application. At this operation, the control unit 160 may output audio information generated by an application according to setting information or a user's request to at least one of the audio processing unit 130 and the application output device 200. For this, the control unit 160 may be configured as shown in FIG. 3.

FIG. 3 is a block diagram illustrating a more detailed configuration of the control unit 160 in an application operating device according to an embodiment of the present disclosure.

Referring to FIG. 3, the control unit 160 according to the present disclosure may include an application operating unit 161, a buffer 163, a sound mixer 165, a sound manager 167, and a data communication unit 169.

The application operating unit 161 can support the operation of a specific application selected by an event generated by the input unit 120 and the display unit 140 having an input function or an application set to be executed by an event generated according to setting information. Further, the application operating unit 161 1 can activate and execute a specific application according to a request from the application output device 200 connected through the connection interface 170.

The application operating unit 161 can activate a plurality of applications according to the generation of an event. The application operating unit 161 can execute a specific application selected from a plurality of applications according to a user's selection or settings. The application operating unit 161 may output one of application data generated by an application to the display unit 140. The application operating unit 161 can process the remaining application data in a background. For example, the application operating unit 161 may control to load application data related activated applications to a memory or a buffer but not to output to the display unit 140. The application operating unit 161 may output only the application data of an application requested for execution to the display unit 140.

The application operating unit 161 can switch a specific application from an activated state to an execution state according to setting information, and control the specific application according to the setting information. Alternatively, the application operating unit 161 may not execute the specific application in the activated state but inform in an interrupt form that an event corresponding to the application has been generated.

If an execution of a specific application is requested from at least one of the input unit 120 and the display unit 140 having an input function, the application operating unit 161 may execute the corresponding application. If the application is in an inactive state, the application operating unit 161 can load the application in a memory and execute the application. If the application is in an active state, the application operating unit 161 may switch to an execution state and output application data generated by the application to the display unit 140.

Further, if an input signal for operating a specific application is received from an input device or the application output device 200, the application operating unit 161 may control to apply the input signal to the corresponding application. Here, the application operating unit 161 may control to apply an input signal generated by an input device of the application operating device 100 to an application executing as default. The application operating unit 161 can control to apply an input received from the application output device 200 to an application designated by the input signal. Here, the application operating unit 161 can control the input signal received from the application output device 200 to be processed in a background. Alternatively, the application operating unit 161 can switch the application to an execution state according to the input signal received from the application output device 200, and output corresponding application data to the display unit 140 by applying the input signal.

The application operating unit 161 can provide audio information for the sound manager 167. The application operating unit 161 may transmit audio information generated by an application to the sound mixer 165. The application operating unit 161 may control the buffer 163 to transmit the application data. If a plurality of applications is activated, the application operating unit 161 may allocate the application individually to the buffers 163. The application operating unit 161 may write information related to the application in the corresponding buffers while allocating the applications to the buffers 163. As a result, applications supported by the buffers 163 can be identified by accessing the buffers 163.

The buffer 163 stores application data provided by the application operating unit 161. As described above, the buffers 163 may be allocated by each application. The buffer 163 stores screen data and audio information according to the operation of application. The screen data and audio information stored in the buffer 163 may be updated according to the operation of application. The screen data and audio information stored in the buffer 163 may be transmitted to the data communication unit 169. Further, the screen data and audio information stored in the buffer 163 may be provided for the display unit 140 and the audio processing unit 130. A portion of audio information stored in the buffer 163 may be provided for the audio processing unit 130, and another portion of the audio information may be provided for the application output device 200 through data communication unit 169.

The sound mixer 165 stores audio information provided by the application operating unit 161 in the buffer 163 by classifying the audio information according to the applications or by mixing. A plurality of sound mixers 165 may be disposed for each application in an activated state and an executing state according to the design of mixers. Alternatively, only one sound mixer 165 may be configured to process audio information generated by a plurality of applications. The sound mixer 165 may not store audio information in the buffer 163 but may instead directly transmit to the application output device 200 through the data communication unit 169.

The sound manager 167 can process and update audio information of the sound mixer 165. Namely, the sound manager 167 supports an allocation and retrieval of the sound mixer 165. If an output for audio information of a specific application is requested by the application operating unit 161, the sound manager 167 may allocate a sound mixer 165. If the execution of the application is terminated, the sound manager can retrieve sources allocated to the sound mixer 165. At this operation, the sound manager 167 may control so that a portion of audio information provided by the application operating unit 161 is output according to a user's request or setting information. For example, if each application generates audio information in a state of executing 3 applications, the sound manager 167 may allocate a sound mixer 165 for first audio information according to the setting information. The sound manager 167 may output second audio information to the audio processing unit 130 according to the setting information. Further, the sound manager 167 may control to disregard third audio information. As a result, among the audio information generated by 3 applications, the first audio information is output to the application output device 200, the second audio information is output in the application operating device 100. The output of the third audio information may be omitted without outputting.

The data communication unit 169 is a component for transmitting application data stored in the buffer 163 to the application output device 200. For this, the data communication unit 169 may form a communication channel with the application output device 200 through the connection interface 170. The data communication unit 169 can form at least one of a wired communication channel and a wireless communication channel. The data communication unit 169 uses at least one communication channel for transmission of individual application data.

For example, the data communication unit 169 can form at least one of various communication channels with the application output device 200, such as a WiFi communication channel, a USB communication channel, a UART communication channel, and a Bluetooth communication channel. The data communication unit 169 may transmit a portion of application data to the application output device 200 through a USB communication channel, and another portion of the application data to the application output device 200 through a Bluetooth communication channel. Further, the data communication unit 169 may transmit the remaining portion of the application data to the application output device 200 through a WiFi communication channel or a UART communication channel.

The data communication unit 169 can receive an input signal provided by the application output device 200. The data communication unit 169 may transmit the received input signal to the application operating unit 161. The input signal provided by the application output device 200 may be a request for outputting audio information generated by a specific application.

FIG. 4 is a block diagram illustrating a more detailed configuration of an application output device according to an embodiment of the present disclosure.

Referring to FIG. 4, the application output device 200 according to the present disclosure may include a device communication unit 210, device input unit 220, device output unit 230, device display unit 240, device storage unit 250, device control unit 260, and device connection unit 270.

The device communication unit 210 is a component for supporting a communication function of the application output device 200. If the application output device 200 is a desktop computer, the device communication unit 210 may include a modem for supporting a wired internet. Further, if the application output device 200 is designed to support a mobile communication function, the device communication unit 210 may include a mobile communication module.

The device input unit 220 generates an input signal for the application output device 200. The device input unit 220 may include various physical devices such as a keyboard, a mouse, a voice input device, and an electronic pen. If the device display unit 240 is configured with a touch screen having a touch panel, the device display unit 240 may be usedas an input means. The device input unit 220 can generate an input signal for specific applications of the application operating device 100 to output through the application output device 200.

For example, the device input unit 220 may generate an input signal for selecting an application area corresponding to at least one application operating in the application operating device 100 in order to adjust audio information of application corresponding to the selected application area according to a user's control. The input signal generated by the device input unit 220 may be transmitted to the application operating device 100 under the control of the device control unit 260.

The device output unit 230 is a component for outputting audio information of the application output device 200. The device output unit 230 may include at least one receiver and at least one speaker. The device output unit 230 may output audio information generated by the application output device 200. Further, the device output unit 230 can output audio information provided by the application operating device 100. The audio information output by the device output unit 230 may be audio data formed by mixing audio information generated by a plurality of applications. Alternatively, the audio information output by the device output unit 230 may be audio information generated by a specific application.

The device display unit 240 may output various screens for the operation of the application output device 200. For example, the device display unit 240 may output a waiting screen, an icon screen, and a menu screen for the operation of the application output device 200. The device display unit 240 may output an application area corresponding to an application provided by the application operating device 100. The application area output to the display unit 140 may be displayed in a predetermined location according to the setting information. The device display unit 240 may display an application sound control box for adjusting the audio information of applications in the application operating device 100. The application sound control box may include items for adjusting audio information of at least one application. A screen interface output through the device display unit 240 will be described in more detail referring to the accompanying drawings.

The device storage unit 250 can store various application programs and data used for the operation of the application output device 200. For example, the device storage unit 250 may include an operating system for the application output device 200. Further, the device storage unit 250 may include a program for outputting application data being used in the application operating device 100 to a predetermined application area. For example, the device storage unit 250 may include an application manager program 261. The application manager program 261 is loaded into the device control unit 260 to output application data if a connection is formed between the application operating device 100 and the application output device 200.

The device connection unit 270 supports a connection with the application operating device 100. The device connection unit 270 may be configured with at least one interface to support the connection with the application operating device 100. For example, the device connection unit 270 may include at least one of parallel connection interfaces such as a USB or UART interface, and at least one of wireless communication interfaces such as a Bluetooth, Zigbee, and UWB interface.

The device control unit 260 may perform a transmission of a control signal for controlling the application output device 200, data processing, buffering of application data, outputting of application area related to application data, and collecting and transmitting an input signal. For this, the device control unit 260 may include an application manager 261.

The application manager 261 forms a communication channel for a connection with the application operating device 100. The application manager 261 receives application data provided by the application operating device 100, classifies the application data, and controls to output an application area corresponding to the classified data to the device display unit 240. The application manager 261 may control to output audio information included in the application data. For example, if 3 items of audio information are received, the application manager 261 may control to output at least one item of audio information through the device output unit 230 according to a user's control or a control of the application operating device 100. The application manager 261 transmits an input signal generated by the device input unit 220 to the application operating device 100, and outputs if corresponding audio information is received.

FIG. 5 is a flowchart illustrating a method for controlling an application operating device to control an audio output according to an embodiment of the present disclosure.

Referring to FIG. 5, the control unit 160 of the application operating device 100 performs a support function or waits at operation 501. At this operation, the control unit 160 may output a waiting screen or a menu screen of the application operating device 100. If a specific application is requested to be executed, the control unit 160 executes the corresponding application and outputs a corresponding screen. If an activation of an application is requested, the control unit 160 activates the application, and may support a background processing to maintain the activated application.

The control unit 160 may perform a connection with the application output device 200 at operation 501. If a connection with the application output device 200 is requested, the control unit 160 performs an operation of identifying the application output device 200. For example, the control unit 160 may detect the application output device 200 through a Bluetooth scan operation, and form a Bluetooth communication channel through a pairing operation. If a connection of a USB cable is tried, the control unit 160 identifies the application output device 200 through an exchange of specific data, and forms a data communication channel in a wired communication method. Further, the control unit 160 may identify the application output device 200 through a WiFi module or a mobile communication module, and accordingly forms a communication channel.

In the state of connecting the application output device 200, the control unit 160 identifies whether an audio output event is generated at operation 503. Namely, the control unit 160 can identify whether an event for outputting audio information is generated in the state that at least one application is activated and executing. If no audio output event is generated at this operation, the control unit 160 branches off to operation 505 and identifies whether an event for terminating the operation of the application operating device 100 is generated. If the event for terminating the operation of the application operating device 100 is not generated, the control unit 160 branches off to operation 501 and re-performs the following operations. In the meantime, the control unit 160 may identify whether an event for disconnecting the application output device 200 is generated at operation 505. If an audio output event for disconnecting the application output device 200 is generated, the control unit 160 may output through the audio processing unit 130 as default.

If an audio output event is generated at operation 503, the control unit 160 identifies whether an application related to the audio output event is a shared application at operation 507. Here, the shared application means an application in a state that data of application activated and executing in the application operating device 100 is output through the device display unit 240 of the application output device 200.

If the related application is not a shared application at operation 507, the control unit 160 branches off to operation 509 and outputs through the audio processing unit 130. Namely, the control unit 160 may control to output audio information corresponding to the audio output event through a speaker provided in the application operating device 100, receiver, or earphone. If the related application is a shared application at operation 507, the control unit 160 branches off to operation 511 and controls to transmit the audio information to the application output device 200.Thereafter, the control unit 160 returns to operation 501.

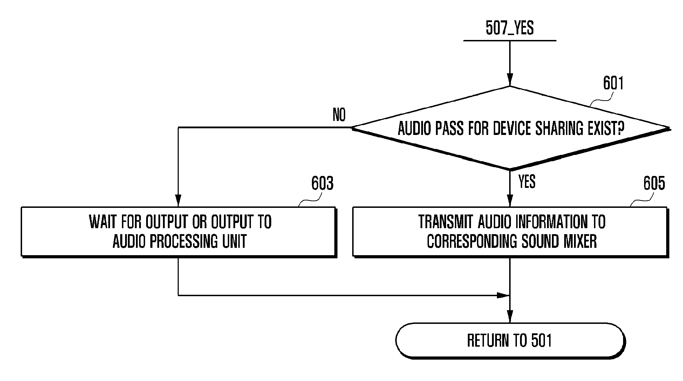

FIG. 6 is a flowchart illustrating a detailed procedure of operation 511 in FIG. 5 according to an embodiment of the present disclosure.

Referring to FIG. 6, if the related application is a shared application at operation 507, the control unit 160 branches off to operation 601 and identifies whether a shared audio pass for devices or an audio setting exists. Namely, the control unit 160 may identify whether a sound mixer set to output the audio information generated by the related application to the application output device 200 exists, whether an audio pass including the device output unit 230 of the application output device 200 exists, or whether a setting of requesting to output the audio information to the application output device 200 exists.

If an audio pass for sharing audio information doesn't exist at operation 601, the control unit 160 branches off to operation603, and waits for an output or controls the audio processing unit 130 of the application operating device 100 to output. Here, the output waiting state may practically be a state of not outputting the corresponding audio information. As a result, the audio information in the output waiting state can be removed. The control unit 160 may control to record the audio information in the output waiting state. The audio information recorded by a specific application may be stored in a storage unit.

If a shared audio pass doesn't exit at operation 601, the control unit 160 branches off to operation 605, and transmits the audio information to a corresponding sound mixer. Alternatively, if a setting of requesting to output the audio information to the application output device 200 exists, the control unit 160 may allocate a sound mixer 165, and transmit the audio information to the corresponding sound mixer 165. The sound mixer 165 may store the audio information in the buffer 163, and transmit to the application output device 200 through the data communication unit 169. At this operation, if audio information requested to transmit to the application output device 200 exists, the sound mixer 165 may mix the individual audio information and transmit to the application output device 200. Alternatively, the sound mixer 165 can control a plurality of audio information to be transmitted to the application output device 200 through communication channels having different properties.

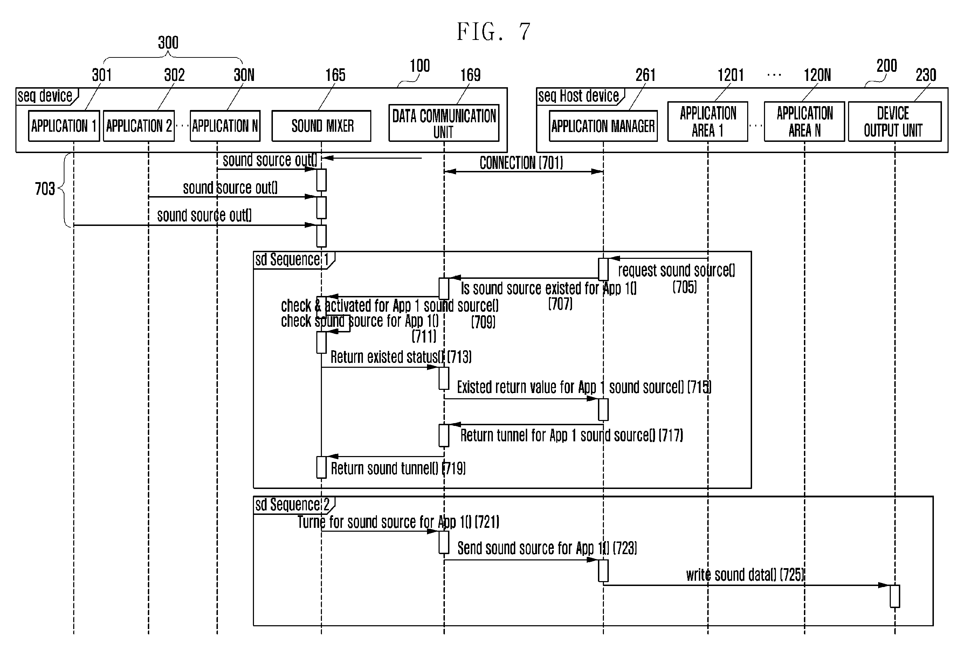

FIG. 7 is a flowchart illustrating a method for transmitting audio information to the application operating device 200 according to an operation of sound mixer 165 in the application operating device 100 according to an embodiment of the present disclosure.

Referring to FIG. 7, the application operating device 100 can operate a plurality of applications (301, 302, ... 30N). A portion of the plurality of applications 300 may be in an activated state and another portion of the plurality of applications may be in an executing state. The application operating device 100 can allocate sound mixers 165 for processing audio information generated by the application 300. The sound mixer 165 can store, transmit, and output the audio information generated by the application 300. The application operating device 100 may include a data communication unit 169 for transmitting audio information generated by each application 300. The application operating device 100 may further include an application operating unit 161 and a sound manager 167 to control the operation of the application, and to transmit and process the audio information. FIG. 7 illustrates a portion of the control unit of the application operating device 100 to explain a process of transmitting audio information.

The application output device 200 may include an application manager 261 to control a connection with the application operating device 100 and a reception of application data. The application output device 200 may include application areas (1201, ... 120N) corresponding to data classified by the application manager 261. The application areas (1201, ... 120N) are components output to the device display unit 240, and may be data stored in a frame memory provided for outputting screen of the device display unit 240. The application data may include audio information. The application output device 200 may include a device output unit 230 to output at least a portion of audio information included in the application data.

The application operating device 100 and the application output device 200 perform a connection at operation 701. Through this operation, the application operating device 100 and the application output device 200 can form at least one communication channel. Application data generated by the application operating device 100 can be transmitted to the application output device 200 through the at least one communication channel. Here, the transmitted application data may include audio information.

If the applications 300 are operating to generate audio information, each application 300 may generate individual audio information (sound source out_1(), sound source out_2(), sound source out_N()) at operation 703. The generated audio information (sound source out_1(), sound source out_2(), sound source out_N()) may be transmitted to the sound mixer 165 under the control of the application operating unit 161. The sound mixer 165 may request to transmit at least a portion of the transmitted audio information (sound source out_1(), sound source out_2(), sound source out_N()) to the application output device 200 through the buffer 163 and the data communication unit 169. Alternatively, the sound mixer 165 may request the data communication unit 169 to directly transmit at least a portion of the audio information (sound source out_1(), sound source out_2(), sound source out_N()) to the application output device 200.

In particular, the sound mixer 165 may identify information set related to the audio information (sound source out_1(), sound source out_2(), sound source out_N()), and store at least a portion of audio information in the buffer 163. The sound mixer 165 may maintain a waiting state without transmitting the audio information (sound source out_1(), sound source out_2(), sound source out_N()) to the application output device 200. Alternatively, the sound mixer 165 may output at least a portion of the audio information (sound source out_1(), sound source out_2(), sound source out_N()) through the audio processing unit 130 of the application operating device 100.

In the meantime, the application manager 261 of the application output device 200 may receive an audio information output request (request sound source()) of a specific application area according to an input signal generated by the device input unit 220 at operation 705. For example, the application manager 261 may receive an audio information output request (request sound source()) related to a first application area. The application manager 261 transmits an audio information check and supply request (is sound source existed for Application 1()) of the corresponding application through the data communication unit 169 of the application operating device 100 according to the audio information output request (request sound source()) at operation 707.

The data communication unit 169 transmits an audio information activation check request (check & activated for Application 1 sound source()) of the corresponding application to the sound mixer 165 according to the received audio information check and supply request (is sound source existed for Application 1()) at operation 709. The sound mixer 165 performs an audio information check (check sound source for Application 1()) of the corresponding application at operation 711. Subsequently, the sound mixer 165 transmits an existence state (Return existed status()) to the data communication unit 169 at operation 713. The data communication unit 169 transmits an existence state value (Existed return value for Application 1 sound source()) to the application manager 261 at operation 715. The application manager 261 transmits a tunnel request (Request tunnel for Application 1 sound source()) for providing application audio information to the data communication unit 169 at operation 717. The data communication unit 169 transmits an audio information tunnel request (Request sound tunnel()) to the sound mixer 165 at operation 719. Here, the tunnel may be a channel for transmitting audio information.

The sound mixer 165 forms a tunnel (Tunnel for sound source for Application 1()) for audio information of the application for the data communication unit 169 at operation 721. The data communication unit 169 performs an audio information transmission (Send sound source for Application 1()) of the application at operation 723. The application manager 261 writes (write sound data()) the audio information of the corresponding application in the device output unit 230 at operation 725. The device output unit 230 may output the written audio information (write sound data()).

As described above, the application output device 200 according to the present disclosure can request an audio information output of a corresponding application by directing a specific application from the application areas (1201, ... 120N). Further, the application output device 200 may receive audio information of the application designated by the device input unit 220 and transmit through the device output unit 230.

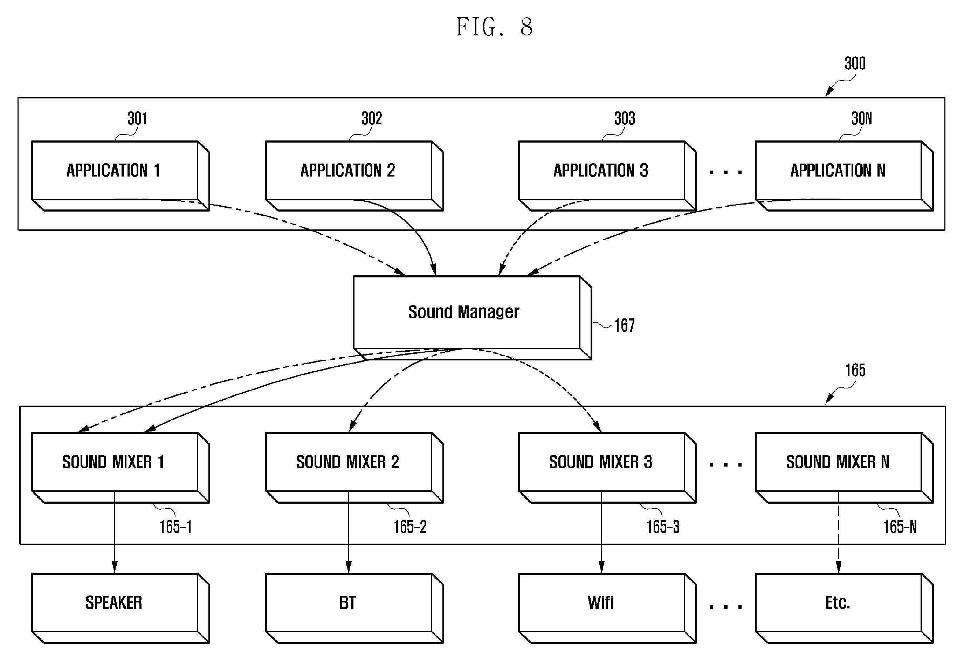

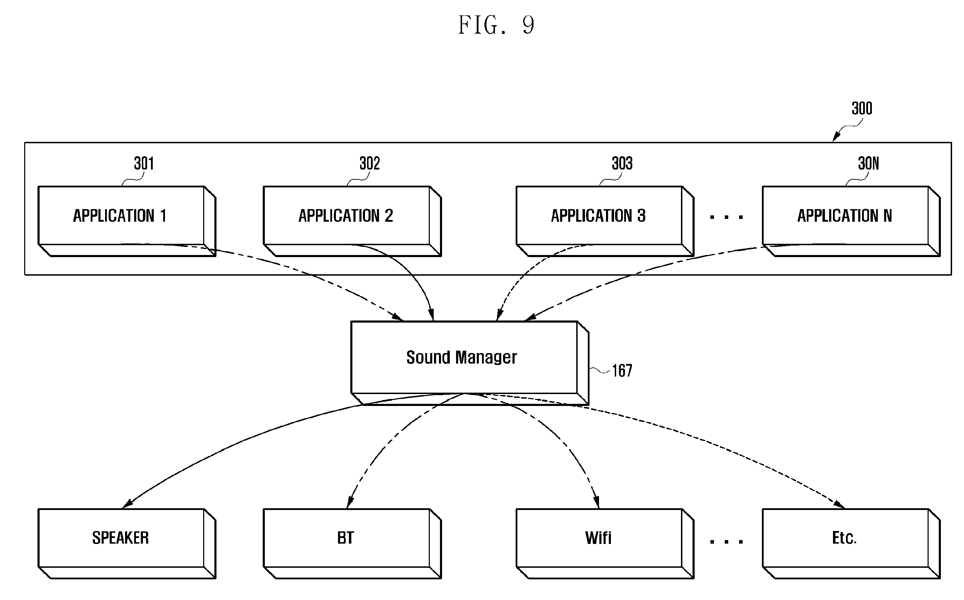

FIGS. 8 and 9 are block diagrams illustrating a method of allocating and operating a sound mixer according to an embodiment of the present disclosure.

Referring to FIG. 8, the application operating device 100 can operate a plurality of applications 300 according to a user control or setting information. Audio information generated by a portion of the first to Nth applications (301, 302, 303, ... 30N) can be transmitted to the sound manager 167.

The sound manager 167 may transmit audio information generated by applications 300 individually to sound mixers (165-1, 165-2, 165-3, ... 165-N). For example, the sound manager 167 may transmit audio information generated by a first application 301 to a first sound mixer 165-1. The sound manager 167 may transmit audio information generated by a second application 302 to a second sound mixer 165-2. Further, the sound manager 167 may transmit audio information generated by a third application 303 to a third sound mixer 165-3. Namely, the sound manager 167 may transmit audio information generated by the first to Nth applications (301, 302, 303, ... 30N) individually to the first to Nth sound mixers (165-1, 165-2, 165-3, ..., 165-N).

In the meantime, the first sound mixer 165-1 may output audio information provided by the sound manager 167 through a speaker SPK. Here, the speaker SPK may be a component included in the audio processing unit 130 of the application operating device 100. If an earphone device is connected to the application operating device 100, the first sound mixer 165-1 can transmit the audio information to the earphone device. The audio information provided by the first sound mixer 165-1 may be information generated by the first application 301. The first sound mixer 165-1 may receive the first audio information from the sound manager 167 and output to the speaker SPK. Alternatively, the first sound mixer 165-1 may extract audio information of the first application 301 from the audio information provided by the sound manager 167, and output the extracted audio information through the speaker SPK. For this, the first sound mixer 165-1 may receive a request for outputting the audio information of the first application 301 from the sound manager 167.

The second sound mixer 165-2 may receive audio information of the second application 302 from the sound manager 167, or extract audio information of the second application 302 from the audio information provided by the sound manager 167. The second sound mixer 165-2 may transmit the audio information to the application output device 200 through a Bluetooth communication channel. The second sound mixer 165-2 may allocate so that the audio information of the second application 302 is transmitted to the application output device 200 through the Bluetooth communication channel. Similarly, the third sound mixer 165-3 may output audio information of the third application 303 to the application output device 200 through a WiFi communication channel. Further the Nth sound mixer 165-N may transmit audio information of the Nth application 30N to the application output device 200 through other wired/wireless communication channel.

As described above, the application operating device 100 according to the present disclosure may output audio information generated by a plurality of applications 300 to at least one of the application output device 200 and the audio processing unit 130 through communication channels provided by different communication methods. The application output device 200 may output audio information provided through each communication method by mixing or output only the audio information requested by a user through a designated communication channel.

In the meantime, the application operating device 100 according to the present disclosure may be configured with only one sound mixer 165 as shown in FIG. 9. Namely, audio information generated by the first to Nth applications (301, 302, 303, ... 30N) is transmitted to the sound manager 167, and the sound manager 167 may provide the transmitted audio information for the sound mixer 165. Here, the sound manager 167 may transmit individual audio information to the sound mixer 165 by writing information of which application 300 generated the audio information. The sound mixer 165 may then output the audio information provided by the sound manager 167 to the application output device 200 according to a predetermined schedule through a Bluetooth communication channel, WiFi communication channel, or other communication channels. The sound mixer 165 extracts audio information according to the applications, and transmits the extracted audio information through a specific communication channel according the predetermined schedule.

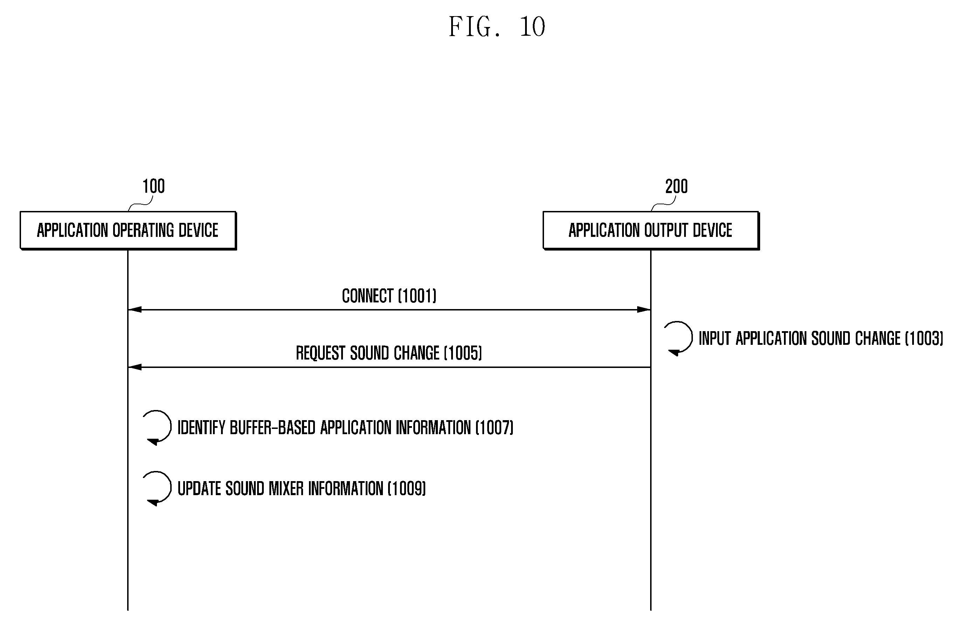

FIG. 10 is a flowchart illustrating a method for changing audio information in an audio output control function according to an embodiment of the present disclosure.

Referring to FIG. 10, the application operating device 100 and the application output device 200 perform a connection at operation 1001. Namely, at least one communication may be formed to transmit audio information between the application operating device 100 and the application output device 200. Here, the formed communication channel may be at least one of various communication channels such as a USB communication channel, a Bluetooth communication channel, and a WiFi communication channel.

The application output device 200 may receive an application sound change input for requesting to adjust specific audio information according to a user control or a predetermined schedule at operation 1003. For this, the application output device 200 may output at least one application area configured with application data provided by the application operating device 100. Each application area may be an area operating in the application operating device 100. Subsequently, the user operating the application output device 200 may select an application area for outputting the audio information by using a mouse, and may generate an input signal requesting for an adjustment of the audio information after selecting the application area. If a specific application area is already selected, the user may perform only the application sound change input for adjusting the audio information.

The application output device 200 transmits a sound change request message to the application operating device 100 at operation 1005. The application output device 200 may transmit the sound change request message through a communication channel formed at the connection operation. If the sound change request message is received from the application output device 200, the application operating device 100 may identify application information through a buffer at operation 1007. Namely, the application operating device 100 allocates a buffer 163 to transmit specific application data to the application output device 200, and the application operating device 100 may transmit information of the corresponding buffer 163 together with the application data. The application output device 200 may identify the buffer 163 information of the application operating device 100 at the operation of identifying the application data provided by the application operating device 100. The application output device 200 may transmit the buffer 163 information to the application operating device 100 by including in the sound change request message corresponding to the currently designated application area. The application operating device 100 may identify the buffer 163 information and the corresponding application from the sound change request message provided by the application output device 200. The application operating device 100 controls to transmit audio information to the application output device 200 by updating the sound mixer 165 information of the corresponding application at operation 1009. Namely, the application operating device 100 may allocate a new sound mixer 165 to transmit the audio information of application requested by the application output device 200 or output the audio information processed by the corresponding sound mixer 165 to the application output device 200.

In the meantime, an output buffer and a receiving buffer may be allocated in the buffer 163 for a data communication between the application operating device 100 and the application output device 200. The receiving buffer is configured to receive a signal provided by the application output device 200. The output buffer and the receiving buffer may be separately configured according to the applications. If the buffers are allocated as described above, the application operating device 100 may receive the sound change request provided by the application output device 200 through the receiving buffer. The application operating device 100 can output audio information of the corresponding application by identifying the application information allocated to the receiving buffer.

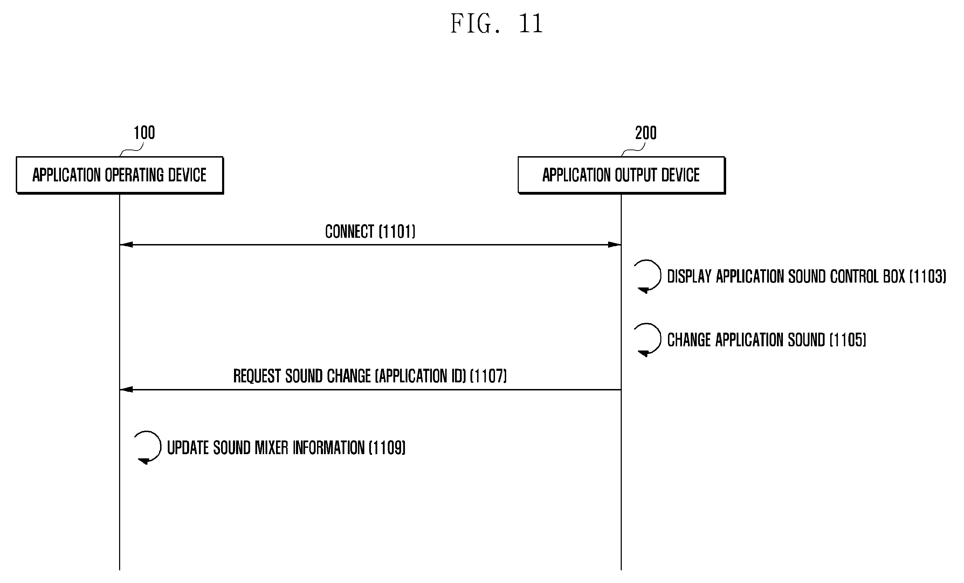

FIG. 11 is a flowchart illustrating a method for changing a sound in an audio output control function according to another embodiment of the present disclosure.

Referring to FIG. 11, the application operating device 100 and the application output device 200 according to the present disclosure perform a connection at operation 1101. The application operating device 100 may form at least one communication channel with the application output device 200, and provide data of operating applications for the application output device 200. The application output device 200 may classify the data of applications provided by the application operating device 100, and output each of the application areas to the device display unit 240.

The application output device 200 outputs an application sound control box to the device display unit 240 at operation 1103. The application sound control box may be output to the device display unit 240 when connected to the application operating device 100 or received application data from the application operating device 100, or when user the application sound control box is requested by a user. The application output device 200 may extract application IDentifier (ID) information of the application data to output the application sound control box, and accordingly generate an application sound control box for requesting an audio information change of each application.

The application output device 200 receives an input for changing an application sound at operation 1105. The user may request the application output device 200 for an input to change a specific application sound by using the application sound control box. The application output device 200 transmits a sound change request message including the application ID information to the application operating device 100 at operation 1107.

If the sound change request message is received from the application output device 200, the application operating device 100 identifies the application ID information from the message, and decides audio information of the application to be changed. The application operating device 100 updates the sound mixer information at operation 1109. Namely, the application operating device 100 allocates a specific application to a sound mixer to transmit audio information of the application to the application output device 200, and transmits the audio information according to the operation of the sound mixer. At this operation, if a sound mixer is already allocated and the requested information is for a volume control of the audio information, the application operating device 100 may correspondingly request the sound mixer to adjust the volume of the audio information. The audio information updated according to the update of the sound mixer information may be output through the device output unit of the application output device 200.

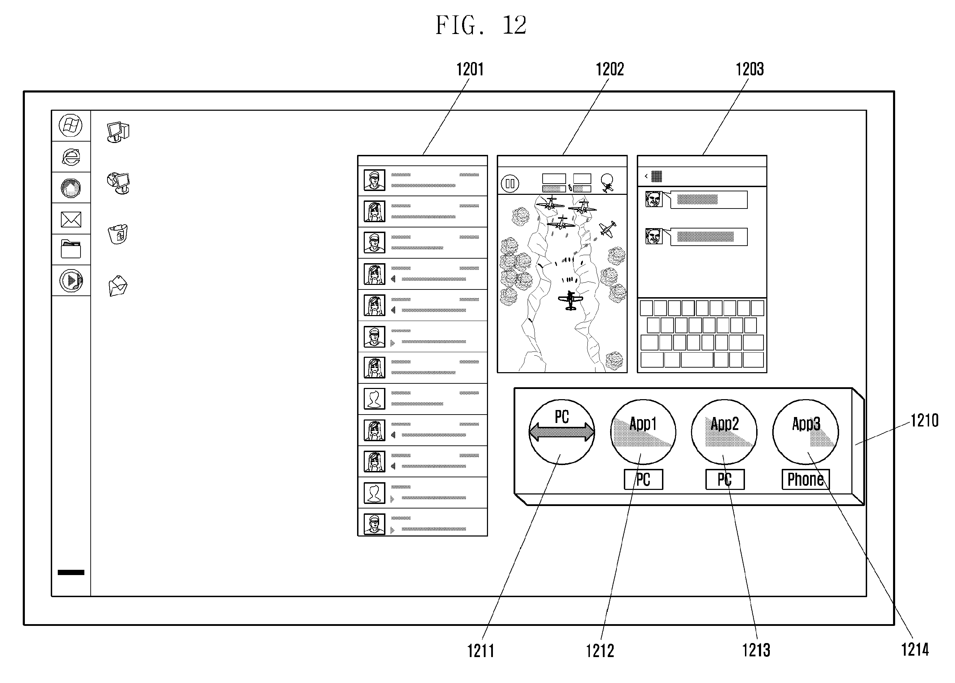

FIG. 12 is a drawing illustrating an example of an application sound control box according to an embodiment of the present disclosure.

Referring to FIG. 12, the application output device 200 may receive data of an application operating in the application operating device 100 after connecting with the application operating device 100. As shown in FIG. 12, the application output device 200 may classify a plurality of application data according to applications, and output the classified application areas (1201, 1202, and 1203) for each application. Accordingly, the application output device 200 can output application areas corresponding to application screens of a plurality of applications operating in the application operating device 100. At this operation, the application output device 200 may receive and output data of an application operating in the background in the application operating device 100. Accordingly, the application output device 200 can identify a plurality of application screens through the application areas (1201, 1202, and 1203), which is hard to identify at the same time in the application operating device 100.

The application output device 200 may output an application sound control box 1210. The application sound control box 1210 may be a component for requesting an audio information output of applications corresponding to the application areas (1201, 1202, and 1203) and an audio information change. The application output device 200 may collect application ID information from the application data to configure the application sound control box 1210, and output an box area including control items (1211, 1212, 1213, and 1214) corresponding to the application ID information. The control items (1211, 1212, 1213, and 1214) may correspond to each application data. Alternatively, a control item for an application not generating audio information corresponding to the application areas (1201, 1202, and 1203) may be excluded from the application sound control box 1210. Accordingly, the number of control items (1211, 1212, 1213, and 1214) included in the application sound control box 1210 can be smaller than the number of application areas (1201, 1202, and 1203).

Further, the application output device 200 may receive application data including only the audio information not outputting to the application areas (1201, 1202, 1203) from the application operating device 100. The application output device 200 may output the application sound control box 1210 including corresponding control item (1214) in order to control the audio information of application data not displayed in the application areas (1201, 1202, 1203). Accordingly, the number of control items (1211, 1212, 1213, and 1214) included in the application sound control box 1210 can be greater than the number of application areas (1201, 1202, and 1203).

Each control item (1211, 1212, 1213, and 1214) includes a corresponding application ID information value, and a specific input value can be collected through an input of the device input unit 220. The application output device 200 may designate a specific control item, and provide an adjustment value generated based on the control item for the application operating device 100 by including in the sound change request message. Here, the adjustment value may include a value for requesting to output the only audio information of a specific application with a specific volume size. Further, the adjustment value may include a value for outputting with audio information of other application. The user may request to output audio information of a plurality of applications by mixing or input a sound change request message for outputting the only audio information of a specific application.

The application sound control box 1210 may be removed from the device display unit 240 according to a user's control input. Further, the application sound control box 1210 may be provided in a form of menu item or icon which can be activated according to an input for activation. At the operation of activation, the application sound control box 1210 may identify application data provided by the application operating device 100, and identify whether an application used for outputting audio information from the corresponding application data. The application sound control box 1210 may generate a control item corresponding to the application used for outputting audio information. Additionally, the application sound control box 1210 may output an index or image for the application data not used to output audio information, indicating that an output of audio information is unnecessary. Further, the application sound control box 1210 may include an item 1211 for changing audio information of the application output device 200.

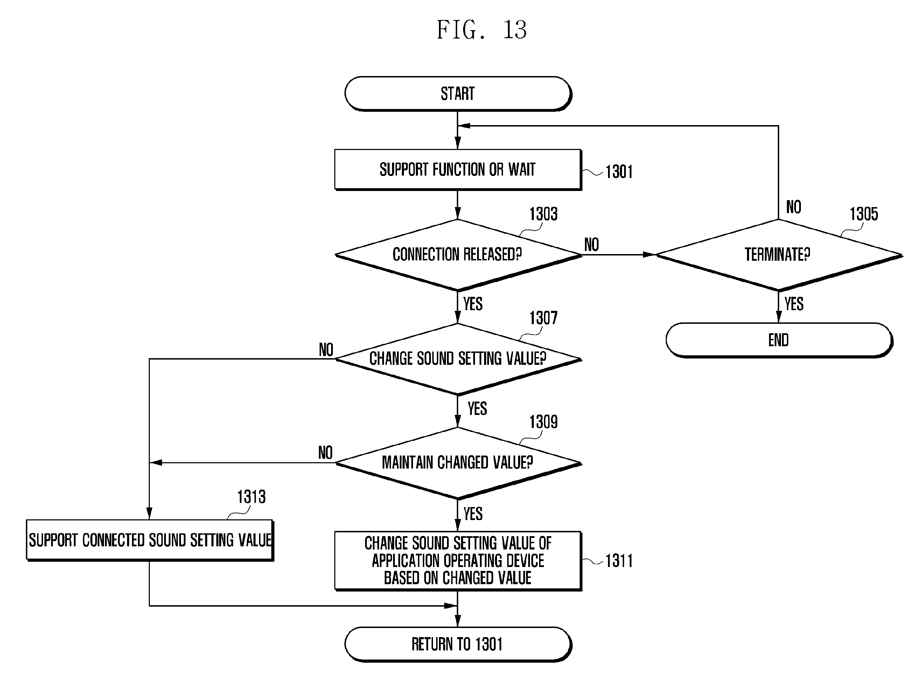

FIG. 13 is a flowchart illustrating a method for operating an application operating device in a device disconnecting procedure of an audio output control function according to an embodiment of the present disclosure.

Referring to FIG. 13, the application operating device 100 supports a device function or wait at operation 1301. For example, the application operating device 100 can transmit application data to the connected application output device 200. Further, the application operating device 100 may receive a sound change request for changing audio information from the application output device 200, and change the corresponding audio information. The application operating device 100 identifies whether the application output device 200 is disconnected at operation 1303. If the application output device 200 is not disconnected, the application operating device 100 identifies whether an input signal for terminating the device operation is generated at operation 1305. If an input signal for terminating the device operation is not generated, the application operating device 100 branches off to operation 1301, and re-performs the following operations.

If an event for disconnecting the application output device 200 is generated at operation 1303, the application operating device 100 branches off to operation 1307, and identifies whether a sound setting value is changed. Namely, while connecting to the application output device 200, the application operating device 100 may identify whether a sound change request has been received from the application output device 200. If the sound change value has been changed at this operation, the application operating device 100 branches off to operation 1309, and identifies whether to maintain the changed value. For this, the application operating device 100 may output a popup window to check whether the changed value is maintained. Alternatively, the application operating device 100 may perform a default operation according to predefined information. Namely, if information of requesting to apply the changed value or schedule information exists, the application operating device 100 branches off to operation 1311, and accordingly changes the sound setting value of the application operating device 100.

If an input for not requesting to apply the changed value or schedule information exists at operation 1309, the application operating device 100 branches off to operation 1313, and applies a sound setting value before the connection with the application output device 200. For this, the application operating device 100 may manage by storing the sound setting value of the application operating device 100 before the connection with the application output device 200. Subsequently, the application operating device 100 returns to the operation of supporting a device function, and perform a specific function according to a user input or schedule information.

In the above description, although an example of transmitting an input for changing audio information of a specific application generated by the application output device 200 to the application operating device 100 has been described, the present disclosure is not limited to this. Namely, the application operating device 100 according to the present disclosure may control an audio information change of a specific application according to a user input, and transmit the changed audio information to the application output device 200.

Further, although an example of controlling an audio output by connecting the application operating device 100 with an application output device 200, the present disclosure is not limited to this. Namely, a plurality of application operating devices 100 may be connected to an application output device 200, or an application operating device 100 may be connected to a plurality of application output devices 200. If a plurality of application operating devices 100 is connected to an application output device 200, the application output device 200 may output only the audio information provided by a specific application operating device 100 according to a user's decision, or may output audio information provided by the plurality of application operating devices 100 by mixing. Alternatively, the application output device 200 may simultaneously output audio information received through each communication channel to a plurality of output devices or to an output device. The device output unit 230 of the application output device 200 for outputting audio information to the plurality of output devices may include a plurality of speakers.

If a plurality of application output devices 200 is connected to an application operating device 100, audio information of a plurality of applications operating in the application operating device 100 may be divided in order to transmit to each application output device 200. For this, the application operating device 100 may form different communication channels for each application output device 200, and control to transmit the audio information through each communication channel. At this operation, the application operating device 100 may transmit a plurality of audio information to a specific application output device 200, and the corresponding application output device 200 may output audio information selected from the plurality of audio information, or simultaneously output by mixing.

As described above, an audio output control function according to the present disclosure may output audio information of a specific application to at least one of the application operating device 100 and the application output device 200 according to an audio information output request of at least one of the application operating device 100 and the application output device 200 while forming a connection between the application operating device 100 and the application output device 200. The application operating device 100 may output audio information of at least one of the plurality of applications activated and operating according to a user control or schedule information to the application output device 200. At this operation, the application operating device 100 may output audio information of at least one of the plurality of applications through the audio processing unit 130, and output identical audio information provided for the application output device 200 or different audio information to the audio processing unit 130 according to a generated event.

The application output device 200 may output a portion of audio information provided by the application operating device 100 according to a user's request or setting information. For this, the application output device 200 may form a plurality of communication channels with the application operating device 100, and receive or output audio information of each application through each communication channel. Accordingly, the application output device 200 may output a portion of audio information provided the application operating device 100 or output the whole audio information according to a user's intention.

As described above, the audio output control function according to the present disclosure may provide data of an application operating in the application operating device 100 for at least one application output device 200, and enables various operations of audio information according to a user's desire.

In the meantime, at least one of the application operating device 100 and the application output device 200 may include various additional modules according to the design of the device. Namely, in the case of communication terminal, at least one of the application operating device 100 and the application output device 200 may further include components not described above, such as a Local Area Network (LAN) communication module for communicating through a LAN, internet communication module for performing an internet function by connecting to an internet network, and a digital broadcast module for performing receiving and playing functions. All the components cannot be listed here because the variations of the components are much great according to the trend of digital convergence, however component having a similar level with the aforementioned components may be further included in the device. Further, in at least one of the application operating device 100 and the application output device 200 according to the present disclosure, specific components may be omitted or replaced with other components according to the supply specifications of the device. It will be apparent to those of ordinary skill in the art.

Further, at least one of the application operating device 100 and the application output device 200 according to various embodiments of the present disclosure may include all the communication terminals operating by communication protocols corresponding to various communication systems, and all the information and communication equipments and their application equipments, such as a Portable Multimedia Player (PMP), a digital broadcast player, a Personal Digital Assistant (PDA), a music player (for example, a digital music player), a portable game terminal, a smart phone, a notebook, and a hand-held Personal Computer (PC).

As described above, a method for controlling an audio output and an electronic device supporting the same according to the present disclosure provide a more improved audio output function.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for controlling an audio output, the method comprising:
connecting an application operating device to an application output device through at least one communication channel; and
transmitting audio information of at least one of a plurality of applications operating based on the at least one communication channel from the application operating device to the application output device.

2. The method of claim 1, wherein the connecting of the application operating device to the application output device comprises forming a plurality of communication channels between the application operating device and the application output device, and
wherein the transmitting of the audio information comprises transmitting audio information of the plurality of applications to the application output device respectively through the plurality of communication channels.

3. The method of claim 1, further comprising:
transmitting application data corresponding to the plurality of applications operating in the application operating device to the application output device;
receiving, by the application operating device, a request for changing the audio information of the at least one application from the application output device;
performing, by the application operating device, an audio information change to be transmitted to the application output device, according to the request for the changing of the audio information; and
transmitting the audio information changed by the application operating device to the application output device.

4. The method of claim 3, wherein the performing of the audio information change comprises:
allocating, by the application operating device, a sound mixer respectively to the plurality of applications; and
updating a sound mixer requested for the audio information change.

5. The method of claim 3, wherein the performing of the audio information change comprises:
identifying, by the application operating device, an IDentifier (ID) information of the application based on a buffer of an individual application area for transmitting the application data; and
performing, by the application operating device, an audio information change of the application based on the ID information of the application.

6. The method of claim 1, further comprising:
transmitting application data corresponding to the plurality of applications operating in the application operating device to the application output device;
receiving, by the application operating device, a request for changing audio information of a specific application with an application IDentifier (ID) from the application output device;
identifying, by the application operating device, an application to change audio information based on the application ID;
performing, by the application operating device, an audio information change according to the request for changing audio information; and
transmitting the changed audio information from the application operating device to the application output device.

7. The method of claim 1, further comprising one of:
outputting audio information different from the audio information transmitted by the application operating device to the application output device; and
outputting audio information that is the same as the audio information transmitted by the application operating device to the application output device.

8. A device for operating an application, the device comprising:
a connection interface configured to be connected to an application output device through at least one communication channel; and
a control unit configured to control to transmit audio information of at least one of a plurality of applications operating based on the at least one communication channel to the application output device.

9. A device in accordance with claim 8, the device being adapted to implement a method in accordance with any one of claim 1 to 7

10. A device for outputting an application, the device comprising:
a device connection unit configured to receive audio information of at least one of a plurality of applications operating in an application operating device connected to an application output device through at least one communication channel;
a device output unit configured to output the audio information received by an application output device; and
a device control unit configured to output the audio information.

11. The device of claim 10, wherein the device connection unit is configured to form a plurality of communication channels with the application operating device, and
wherein the device output unit is configured to one of output audio information of at least one of a plurality of applications received through each communication channel and to output the audio information by mixing.

12. The deice of claim 10, further comprising:
a device display unit configured to display at least one of application areas corresponding to application data of the plurality of applications operating in the application operating device; and
a device input unit configured to generate a request input for changing audio information of a corresponding application in a state of directing one of the displayed application areas,
wherein the device control unit is configured to transmit the request for changing audio information to the application operating device and to control to output audio information changed according to the request for changing audio information.

13. The device of claim 10, further comprising:
a device display unit configured to display an application sound control box including a control item corresponding to the audio information.

14. The device of claim 13, wherein the device control unit is configured to transmit application IDentifier (ID) information and an adjusted value corresponding to the control item and to control to output audio information by receiving the audio information changed corresponding to the application ID information and the adjusted value, if an input for adjusting the control item is included in the application sound control box.

15. The device of claim 10, wherein the device output unit is configured to output one of audio information that is the same as the audio information being output by the application output device in the application operating device and different audio information.
